Europäisches Patentamt

**European Patent Office**

**Office européen des brevets**

(11) Numéro de publication: **0 178 724**
**A1**

(12) # DEMANDE DE BREVET EUROPEEN

(21) Numéro de dépôt: **85201612.0**

(22) Date de dépôt: **05.10.85**

(51) Int. Cl.⁴: **B 21 B 27/06**
**B 21 B 27/00**

(30) Priorité: **08.10.84 LU 85578**

(43) Date de publication de la demande:
**23.04.86 Bulletin 86/17**

(84) Etats contractants désignés:
**AT BE CH DE FR GB IT LI NL SE**

(71) Demandeur: **S.A. des Fonderies J. Marichal, Ketin & Cie.**
**Verte-Voie 39**
**B-4200 Sclessin-Liège(BE)**

(72) Inventeur: **Breyer, Jean-Pierre**
**87 Voie de Liège**
**B-4920 Embourg(BE)**

(72) Inventeur: **Purnode, Jacques**
**11 rue des Fusillés**
**B-4541 Berneau(BE)**

(72) Inventeur: **Evrard, Jacques**
**23 rue des Thiers**
**B-4170 Sprimont(BE)**

(74) Mandataire: **Dellicour, Paul**
**Office de Brevets E. Dellicour rue Fabry 18/012**
**B-4000 Liège(BE)**

(54) **Aménagement des dernières cages finisseuses d'un train à bandes à chaud.**

(57) L'aménagement consiste dans l'utilisation de cylindres haut-chrome et dans l'injection sous pression d'une émulsion de lubrifiant de laminage, de manière à pallier au manque d'oxydes lubrifiants présents à la surface des cylindres.

EP 0 178 724 A1

1

## Aménagement des dernières cages finisseuses d'un train à bandes à chaud

La présente invention concerne les cylindres de laminoirs destinés à équiper les dernières cages finisseuses d'un train à bandes à chaud.

Les types de cylindres utilisés actuellement dans ces cages finisseuses sont des cylindres en fonte à trempe indéfinie à deux métaux. Ces cylindres ont des duretés comprises entre 75 Shore C et 85 Shore C en début de vie. Ils sont coulés statiquement ou par centrifugation.

Ces cylindres connus présentent la caractéristique de voir leur dureté décroître en fonction du diamètre. La centrifugation avait apporté une légère amélioration à ce point de vue. Néanmoins, cette chute de dureté oblige à utiliser ces cylindres neufs dans la dernière cage, de manière à profiter au maximum de la dureté la plus élevée. En effet, la qualité de surface des cylindres en dernière cage détermine la qualité du produit fini.

La détérioration progressive en cours de laminage de la surface de ces cylindres oblige à des changements fréquents.

On se heurte depuis plusieurs années au fait qu'un accroissement de dureté est irréalisable avec ce type de cylindres car on fragilise la couche externe, et que toute amélioration de dureté comporte des risques d'accidents.

Il y a une dizaine d'années, des essais ont été effectués à Port-Talbot (British Steel Corporation) dans les dernières cages finisseuses avec des cylindres haut-chrome ayant des pourcentages de chrome compris entre 18 % et 30 % et destinés initialement à équiper les premières cages finisseuses. Ces cylindres avaient des duretés comprises entre 75 Shore C et 80 Shore C.

On retrouve des cylindres haut-chrome pour les premières cages finisseuses dans divers brevets et on peut citer à ce sujet EP-A-O 025 394, EP-A-O 028 980, FR-A-2 504 418 et FR-A-2 517 223.

Ces hautes teneurs en chrome permettent d'obtenir une résistance à l'usure très élevée, supérieure à celle des cylindres fonte mais il est apparu un phénomène de collage localisé. Ce dernier occasionnait des défauts de surface sur le cylindre, défauts qui étaient transférés par après à la tôle, ce qui rendait de tels cylindres inaptes pour les dernières cages finisseuses.

Pour remédier aux divers inconvénients décrits ci-dessus il a paru avantageux suivant l'invention de créer un aménagement des dernières cages finisseuses d'un train à bandes à chaud, caractérisé en ce qu'il consiste dans l'utilisation de cylindres à haut-chrome et dans l'injection sous pression d'une émulsion de lubrifiant de laminage, de manière à pallier au manque d'oxydes lubrifiants présents à la surface des cylindres.

Suivant l'invention cette injection d'émulsion de lubrifiant de laminage est réalisée sur les cylindres de travail inférieurs et supérieurs sous pression, à l'entrée ou à la sortie de la cage.

Suivant une variante de l'invention cette injection d'émulsion de lubrifiant de laminage est réalisée sur les deux faces de la bande à l'entrée de la cage.

La solution préconisée suivant l'invention, consistant à utiliser pour les cylindres une fonte à haut-chrome associée à un équipement de lubrification, permet d'éviter les collages obtenus dans le passé et qui éliminaient ce type de cylindre.

D'autre part, les cylindres haut-chrome pour dernières cages finisseuses suivant l'invention permettent d'obtenir dans la couche extérieure du cylindre des duretés plus élevées (dans la gamme 75 Shore C - 95 Shore C) que celles utilisées aujourd'hui avec les cylindres en fonte à trempe indéfinie et des caractéristiques mécaniques supérieures, et notamment une limite élastique importante. Ce dernier point est particulièrement intéressant car il permet d'éviter très souvent les marquages.

Le type de cylindres pour dernières cages finisseuses utilisé suivant l'invention a donc deux avantages :

1. importante résistance à l'usure, ce qui permet de conserver un profil identique pendant un temps très long ;

**2.** résistances mécaniques telles que l'on évite les marquages.

Et, avec la lubrification suivant l'invention, on évite les problèmes de collage en surface.

On n'a pas décrit ci-dessus les conditions de la lubrification en ce qui concerne la concentration de l'émulsion, la pression d'injection et le débit. Celles-ci seront fonction des applications envisagées.

Alors que l'application d'huile est déjà utilisée en laminage de produits plats, en particulier en laminage à froid - on peut citer à ce sujet les brevets FR-A-2 121 494 et US-A-3 803 808 ou les Patents Abstracts of Japan Vol. 6, n° 207 - elle ne l'est pas dans le cas de cylindres de travail des dernières cages finisseuses d'un train à bandes à chaud.

La caractéristique de l'invention consiste bien dans l'association, dans les dernières cages finisseuses d'un train à bandes à chaud, de l'emploi simultané de cylindres de travail en fonte à haut-chrome et d'un équipement de lubrification.

5

Revendications

1. Aménagement des dernières cages finisseuses d'un train à bandes à chaud comportant des cylindres de laminoirs à deux métaux en fonte, caractérisé en ce qu'il consiste dans l'utilisation de cylindres haut-chrome et dans l'injection sous pression d'une émulsion de lubrifiant de laminage, de manière à pallier au manque d'oxydes lubrifiants présents à la surface des cylindres.

2. Aménagement des dernières cages finisseuses suivant la revendication 1, caractérisé en ce que l'injection est réalisée sous pression sur les cylindres de travail inférieurs et supérieurs.

3. Aménagement des dernières cages finisseuses suivant la revendication 2, caractérisé en ce que l'injection de l'émulsion a lieu à l'entrée de la cage.

4. Aménagement des dernières cages finisseuses suivant la revendication 2, caractérisé en ce que l'injection de l'émulsion a lieu à la sortie de la cage.

5. Aménagement des dernières cages finisseuses suivant la revendication 1, caractérisé en ce que l'injection a lieu sur les deux faces de la bande à l'entrée de la cage.

# RAPPORT DE RECHERCHE EUROPEENNE

Office européen des brevets

**0178724**
Numéro de la demande

EP 85 20 1612

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| Y | FR-A-2 198 798 (RHEINSTAHL HÜTTENWERK)<br>* Page 1, lignes 1-36 * | 1 | B 21 B 27/06<br>B 21 B 27/00 |
| D,Y | FR-A-2 121 494 (NALCO CHEMICAL CO.)<br>* Page 1, ligne 33 - page 2, ligne 8; figure 2 * | 1,2,4 | |
| D,Y | US-A-3 803 888 (BETHLEHEM STEEL)<br>* Colonne 1, lignes 1-16; figure 1 * | 1-3 | |
| D,Y | PATENTS ABSTRACTS OF JAPAN, vol. 6, no. 204 (M-165)[1085], 19 octobre 1982; & JP - A - 57 112 918 (KAWASAKI SEITETSU) | 1,5 | |
| D,Y | EP-A-0 025 394 (USINOR)<br>* Revendication 2a * | 1-5 | **DOMAINES TECHNIQUES RECHERCHES (Int. Cl.4)**<br><br>B 21 B |
| D,Y | EP-A-0 028 980 (USINOR)<br>* Page 4, linges 11-14 * | 1-5 | |
| D,Y | FR-A-2 504 418 (KUBOTA)<br>* Revendication 2a; page 1, lignes 1-10 * | 1-5 | |
| | ---     -/- | | |

Le présent rapport de recherche a été établi pour toutes les revendications

| Lieu de la recherche<br>LA HAYE | Date d'achevement de la recherche<br>07-01-1986 | Examinateur<br>ASHLEY G.W. |
|---|---|---|

Office européen
des brevets

**RAPPORT DE RECHERCHE EUROPEENNE**

**0178724**
Numéro de la demande

EP 85 20 1612

Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| D,X | FR-A-2 517 223 (NIPPON STEEL) <br> * Revendication 13 * <br><br> ----- | 1-5 | |

DOMAINES TECHNIQUES RECHERCHES (Int. Cl.4)

Le présent rapport de recherche a été établi pour toutes les revendications

| Lieu de la recherche <br> LA HAYE | Date d'achèvement de la recherche <br> 07-01-1986 | Examinateur <br> ASHLEY G.W. |
|---|---|---|